# EUROPEAN PATENT APPLICATION

(11) **EP 1 013 310 A1**
(43) Date of publication of application: **28.06.2000**
(21) Application number: 99125239.6
(22) Date of filing: 17.12.1999
(51) Int. Cl.: A62C 27/00, B62D 21/08, B62D 33/04

(54) **Operational vehicle for life-saving services**

(30) Priority: 24.12.1998 DE 19860238
(71) Applicant: IVECO MAGIRUS AG, D-89079 Ulm (DE)
(72) Inventor: Zawadke, Thomas, 89233 Neu Ulm (DE)
(74) Representative: Jorio, Paolo

(57) **Abstract**

An operational vehicle for life-saving services, in particular a fire-engine, comprises a chassis with at least one front and rear axle and a body structure for holding a crew and appliances. The operational vehicle has a cage-shaped tubular supporting structure with two parallel, longitudinally directed supporting tubes (10, 12) at the lower side, at least one respective tubular frame (16, 18, 20), which is directed transversely to the longitudinal direction of the vehicle and surrounds the body structure, in the area of the front and rear axle, and at least one longitudinal tube (52) connecting the frames (16, 18, 20) at the upper side of the body structure in the longitudinal direction. This tube system, which is disposed like a cage, is highly torsion-proof. The tubes may as a whole form a closed transport system for liquids and gases, in particular fire extinguishing water and/or compressed air.

## Description

The invention relates to an operational vehicle for life-saving services, in particular a fire-engine, with a chassis, at least one front and rear axle and a body structure for holding a driver's and crew's cab and an appliance space.

Known vehicles of this kind can be divided into two groups. There are on the one hand vehicles with a conventional chassis as a base and a body structure which is tailored to the special purpose and on the other a number of vehicles which have been entirely developed as a special construction.

Vehicles with a standard chassis, usually from the all-wheel drive tipper class, have a number of disadvantages. It must be possible for the cab to tilt in order to make the engine accessible. Since, however, most vehicles of this type do not just have a driver's cab, but rather a communicating driver's and crew's cab of a considerable size, a tiltable cab entails a high expenditure in construction terms, e.g. with separate tilting hydraulic system. It is often impossible for such driver's and crew's cabs to tilt in engine rooms, as these are not of a sufficient height. As the area between the axles must remain free to remove appliances, the units usually disposed here, such as fuel tank, air vessel and control valves, must be moved into another position, which entails corresponding expenditure.

As a result of moving the tank, air vessel, control valves, etc., they can usually only be accommodated in positions of poor accessibility and are subsequently only accessible from below for repair and maintenance.

The use of the conventional chassis inevitably results in the vehicle having a high centre of gravity and a corresponding risk of tilting. The high entrance level into the crew's cab, which frequently necessitates negotiating three or four steps, is also a disadvantage, e.g. if a person wearing protective equipment, for example a compressed-air breathing apparatus weighing between 14 and 16 kg, is to climb in.

The fire pump can in most cases only be accommodated in a position far away from the auxiliary output drive of the engine, which means that a cardan shaft of a corresponding length and mounted at several points is required, and this gives rise to vibrations and noise.

The accommodation of the tank for the fire extinguishing medium also causes difficulties. As space must be available at the sides of the body structure for appliances, the only space left for this tank is usually that above the longitudinal centre line of the vehicle, where the tank construction must then be correspondingly narrow and high. This also has an adverse effect on the position of the centre of gravity.

Finally, the appliance space is also at a relatively high level, which means that the removal of heavy appliances creates difficulties, and expensive removal aids may even be required.

The list of disadvantages of this fire-engine produced from a conventional chassis is endless. This is why a solution which meets all requirements has not yet been found and is also unlikely to be found in the future. Examples of the prior art outlined here have been illustrated and described in DE 196 06 536 C1, DE 196 21 472 A1, EP 308 136 A2 and EP 755 285 B1.

One of the disclosed special-purpose vehicles constructed especially as a fire-engine is described in EP 0 348 385 A2 of the company Hötzel. The vehicle has a shallow tank, which results in a low overall centre of gravity. The engine is located as a central engine together with the gear unit above the tank for the fire extinguishing water, and the gear unit is connected to the axles via shafts in this tank. This makes the mounting process very expensive in that, e.g. cardan shafts must be accommodated in tubular guides. Maintenance work and repair work are correspondingly expensive. If the vehicle is damaged at the side, the tank lies directly in the impact zone, so that there is a risk of distortion with correspondingly high consequential repair costs. Heavy appliances cannot be stored at a low level in the side area for reasons of space.

DE 40 24 493 of the applicants describes a special-purpose vehicle with a tank module formed so as to bear loads. However the relatively complicated connections of the pump and fire extinguishing system are not adequately taken into account in this solution.

The object of the invention is therefore to provide an operational vehicle of the above type as a special-purpose vehicle which, apart from overcoming numerous disadvantages of the conventional constructions, has a low overall centre of gravity and correspondingly favourable vehicle movement dynamics, as well as a low entrance into the crew's cab and low, easily accessible appliance spaces at the sides of the vehicle.

This object is solved in the case of an operational vehicle of the above type by a tubular supporting structure with two supporting tubes, which extend in the longitudinal direction of the vehicle, as part of the chassis below the cab and appliance space, at least one respective tubular frame, which surrounds the body structure in the transverse direction and is secured to the supporting tubes, in the area of the front and rear axle, and at least one longitudinal tube connecting the two frames at the upper side of the body structure in the longitudinal direction.

The lower supporting tubes, the two frames and the upper longitudinal tube preferably consist of a cylindrical tube material, which achieves a distinctly greater stiffness than the C- or I-sections of the same cross-sectional area which are usually used for chassis. A further advantage of the tubes which are used lies in the fact that they can also be used as a holding and transport system for fire extinguishing medium, in particular fire extinguishing water, foam or powder, optionally also compressed air for operating tools and/or for holding pneumatic and hydraulic lines and power cables.

The supporting tubes are preferably lowered in the central area between the axes of the vehicle, and this area is completely free, so that low, deep and spacious appliance spaces can be set up here. The engine is located in the rear on the rear portion of the two supporting tubes and is directly connected to a gear unit which lies before the engine and at which various auxiliary output drives, e.g. for a fire pump, are also provided. The space above the engine may be used for the auxiliary units of the engine and of the entire vehicle. The noise level in the crew's cab is reduced by disposing the engine in the rear of the vehicle, so that the crew is not subjected to unnecessary stress and interference with radio and telephone communication is largely prevented.

A respective frame directed transversely to the vehicle is preferably located in front of and behind the rear axle in the rear area of the vehicle, and two longitudinal tubes, which are connected to the frames, are also provided at the upper lateral edges of the body structure. The upper horizontal legs may lie in a slightly lower position with respect to the upper level of the body structure and of the longitudinal tubes.

The driver's and crew's cab need not be tiltable, as the engine is located in the rear, where it is easily accessible from both sides.

The tubular supporting structure preferably comprises flanged covers in different positions which can be bored through if a connection to the tube system is required in certain positions in the individual case. Fire extinguishing water from fire extinguishing pools which are sometimes difficult to access can therefore be taken from the front, from the side or from the rear. A particular result of this is to enable the vehicle to be disposed such that the height of the fire pump above the water level of the fire extinguishing pool is kept as small as possible. As is known, the efficiency of suction pumps decreases with the pump head.

The frames are preferably drawn together inwards in the lower region and then extend to the supporting tubes in portions which converge obliquely downwards. The engine is thus located, for example, directly between the portions of the rear frame or frames which extend obliquely downwards.

If two rear frames are provided on both sides of the rear axle, these may be connected by additional connecting tubes.

The vehicle preferably has all-wheel drive and also all-wheel steering, so that it can be moved both in open country and in confined city centres. It is also preferable for the vehicle to have independent wheel suspension instead of the rigid axles conventionally used, so that the overall body structure is only subject to torsional forces to a slight degree.

The fire pump is preferably located between the front wheels or just behind these. The area between the axles therefore remains substantially free to hold appliances.

A cable winch is preferably located at the rear of the vehicle, the cable of which can be passed forward through the vehicle, so that the driver can observe the use of the cable winch.

The wheels preferably have hydropneumatic suspension. This provides several advantageous secondary effects. For example, the entire vehicle may be lowered if it could not otherwise pass through a comparatively low underpass. Moreover, the hydraulic fluid of the spring elements can be pumped backward and forward to compensate for an oblique position of the vehicle in open country.

Further features and advantages of the invention will emerge from the sub-claims.

Preferred embodiments are explained in detail in the following on the basis of the accompanying drawings, in which
- Figure 1 is a side view of a tubular supporting structure according to the invention;
- Figure 2 is a plan view of Figure 1;
- Figure 3 is a front view of the tubular supporting structure, viewed from the left in Figure 1;
- Figure 4 is a rear view of the tubular supporting structure according to the invention, viewed from the right in Figure 1;
- Figure 5 shows the tubular supporting structure of Figures 1 to 4 in a side view with axles and wheels and a part of the equipment;
- Figure 6 is a plan view of Figure 5;
- Figure 7 is a front view of the tubular support with the front axle;
- Figure 8 is a corresponding rear view;
- Figure 9 is a diagrammatic rear view of the vehicle, in which the units accommodated in the engine compartment are drawn with broken lines;
- Figure 10 is a plan view onto a vehicle according to the invention with crew's cab and engine compartment, although without appliance space and without rear loading space;
- Figures 11, 12, 13 and 14 are a side view, plan view, front view and rear view, respectively, of an embodiment of a vehicle according to the invention with complete body structure.

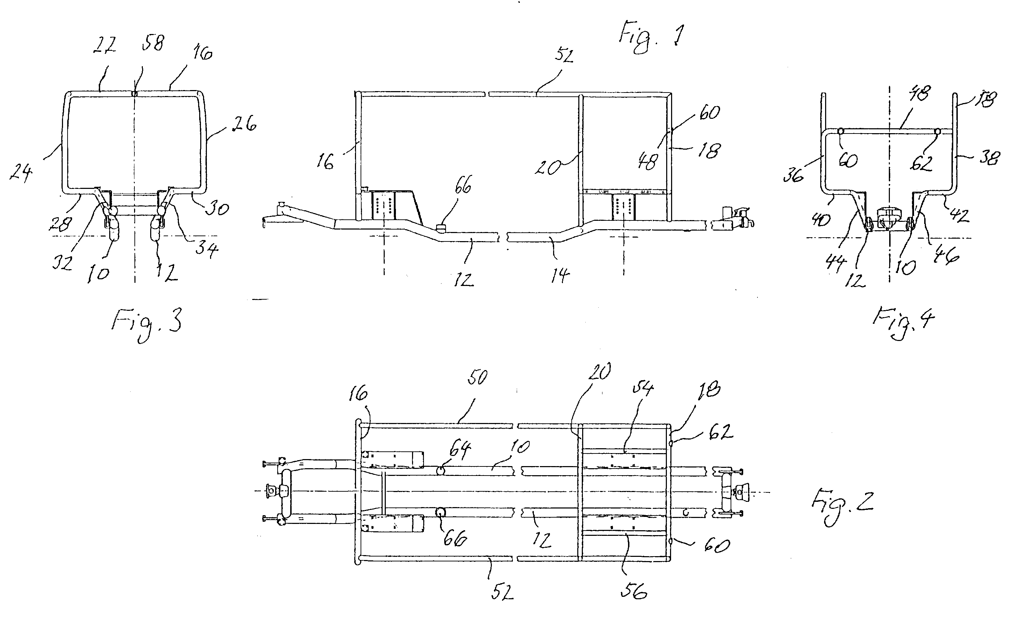

A tubular supporting structure according to the invention shall firstly be described on the basis of Figures 1 to 4. The tubular supporting structure consists as a whole of tube material, partly of differing thickness, in particular of stainless steel or other suitable materials, possibly also plastics. A conventional chassis is replaced by two supporting tubes 10, 12 which extend substantially in parallel in the longitudinal direction and with a centre distance of, for example, 50-70 cm on either side of the longitudinal centre line of the vehicle. The supporting tubes comprise a central portion 14, which is lowered with respect to the front and rear end area via oblique intermediate pieces, which are not designated. This central portion 14 is located between the axles of the vehicle, as shall be subsequently illustrated, and subsequently serves to hold an appliance space which is easily accessible from both sides on account of its low positioning, so that heavy appliances may also be removed without unloading aids.

Break lines indicate in Figures 1 and 2 that the central area of the tubular supporting structure may be of a different length.

In Figures 1 and 2 the tubular supporting structure is shown with the front end on the left-hand side and the rear end on the right-hand side. The positions of the axles, which are not represented in Figures 1 to 4, are indicated by broken lines. Substantially rectangular frames 16, 18 are secured to the supporting tubes 10, 12 in the area directly in front of the front axle and behind the rear axle, which frames substantially follow the outer contour of the vehicle transversely to the direction of travel and at the same time serve as a supporting construction for the outer panelling of the vehicle. A further frame 20, directed transversely to the vehicle direction, is also provided directly in front of the rear axle in the embodiment shown in Figures 1 to 4. The front frame 16 is represented in a front view in Figure 3. The frame consists as a whole of tube material and comprises an upper horizontal portion 22, two perpendicular portions 24, 26, which extend from the ends of the latter on the outside of the vehicle, two horizontal portions 28, 30, which are directed inwards from the lower ends of the portions 24, 26, and two portions 32, 34, which converge obliquely downwards from the latter to the supporting tubes 10, 12.

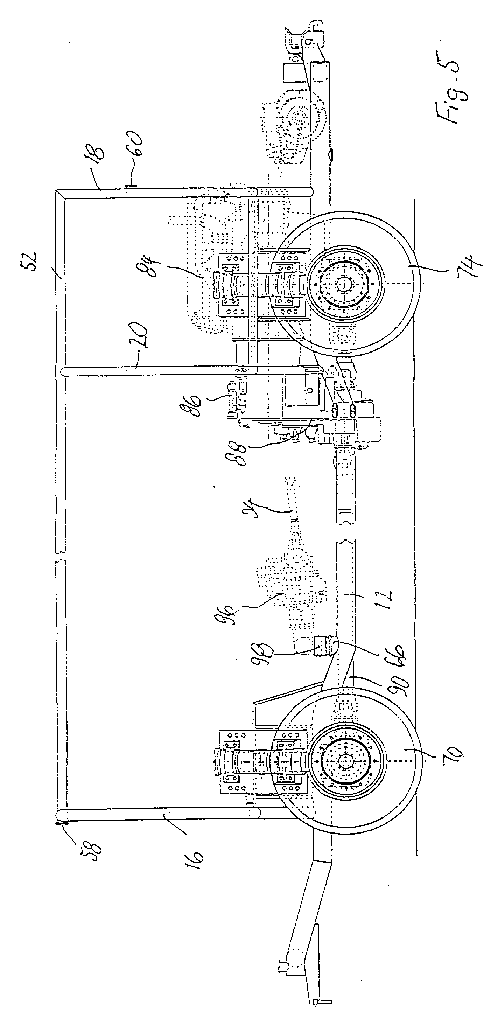

The rear frame 18 similarly comprises two perpendicular portions 36, 38, two horizontal portions 40, 42, which are directed inwards from the lower ends of the latter, and two obliquely converging portions 44, 46. The upper horizontal portion designated by 48 connects the perpendicular portions 36, 38 in a position which lies below the upper ends of these perpendicular portions 36, 38, so that a stowage compartment, for example for ladders, can be formed above the horizontal portion 48 below the roof of the vehicle, which is not shown in Figure 4.

The frame 20 lying in front of the rear axle corresponds substantially to the frame 18 lying behind the rear axle. The upper outer corners of the front frame 16 and the upper ends of the perpendicular portions 36, 38 of the rear frames 18 and 20 are connected by means of longitudinal tubes 50, 52. Where lighter constructions are concerned it may also be possible just to provide one longitudinal tube at the centre line. In the represented embodiment the various tubes of the body structure form a closed cage, on which the roof and the side panelling can be fitted relatively easily. This closed cage is highly torsion-proof, and the frames 16, 18, 20, in particular the front frame 16, which is located directly behind the driver's and crew's cab, which is not shown in Figure 1, at the same time serve as roll bars.

The two rear frames 18 and 20 may in addition be directly connected by shorter longitudinal tubes 54, 56.

As already mentioned, the represented tubular elements form as a whole or at least on one side of the vehicle, for example, a closed tube system which can be used to transport liquids or gases, for instance fire extinguishing water or compressed air, which can consequently be tapped in different positions of the outer contour of the vehicle. For example, a flanged cover 58 is indicated at the top of the front frame, which cover can be bored if a water gun is wanted as an additional device. Figures 1, 2 and 4 show at the upper horizontal portion 48 of the rear frame 18 two laterally staggered flanged covers 60, 62, for example for removing fire extinguishing water. Flanged covers 64, 66 for feeding in or drawing off fire extinguishing water by means of a pump, which is not shown, and for connecting to a fire extinguishing water tank, which is not shown either in Figures 1 to 4, in the vehicle, are located on the supporting tubes 10, 12 behind the front axle.

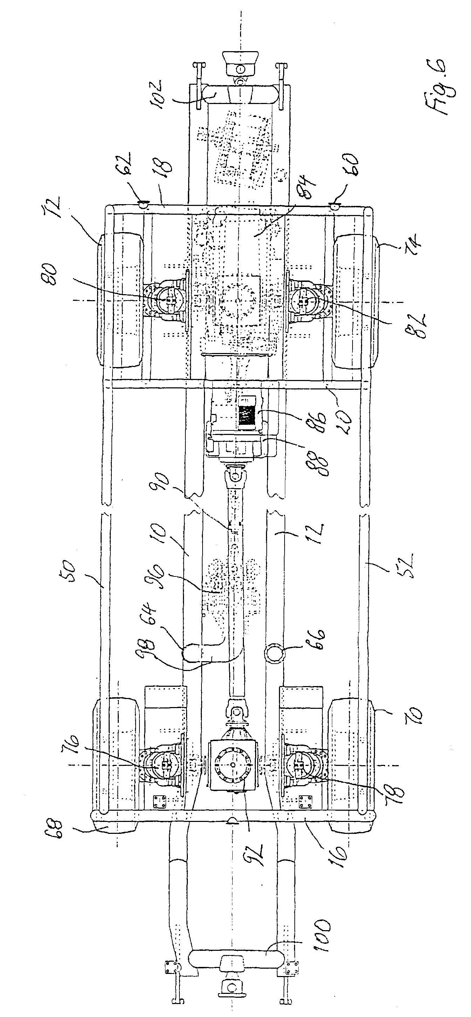

Figures 5 and 6 correspond to Figure 1, although show the tubular supporting structure together with a part of the equipment as well as the axles. The figures show the front wheels 68, 70, the rear wheels 72, 74, the hydropneumatic spring-damper units 76, 78, 80, 82 as well as the elements of the axles and suspension of the spring-damper unit, which are not explained or designated in detail. An engine 84 - represented by broken lines -, a gear unit 86, which lies in front of the latter and is directly connected thereto, and an auxiliary gear unit 88, which is combined with the gear unit 86 to form a unit, are located above the rear axle. A cardan shaft 90, inter alia, extends from this auxiliary gear unit 88 to the front axle, as well as a further shaft 94 to a pump 96, only represented by broken lines, for fire extinguishing water, which pump is located behind the front axle. According to Figures 5 and 6 the pump 96 is connected via a connecting tube 98 to one of the two supporting tubes 10, 12 via one of the bored flanged covers 64, 66. The pump, together with the tubes of the tubular supporting structure according to the invention, enables both fire extinguishing water to be pumped from a fire extinguishing medium pool directly to the scene of the fire or fire extinguishing water to be taken from a fire extinguishing medium pool into a fire extinguishing medium tank and, on the other band, fire extinguishing water to be delivered from the fire extinguishing medium tank at the scene of the fire.

The different units may be secured in an appropriate manner, not shown in detail, to the elements of the tubular supporting structure. Additional reinforcements between the elements of the tubular supporting structure are possible. Figures 5 and 6 show, for example, transverse tubes 100, 102, which connect the longitudinally directed supporting tubes 10, 12 at the front and rear ends.

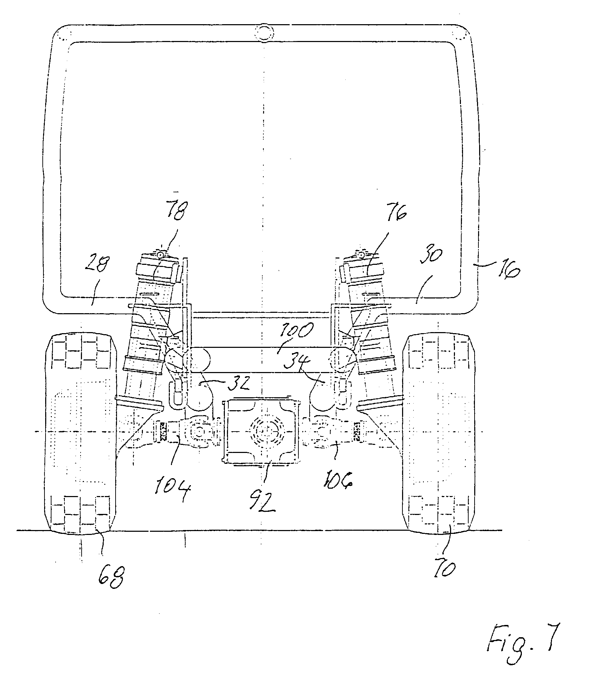

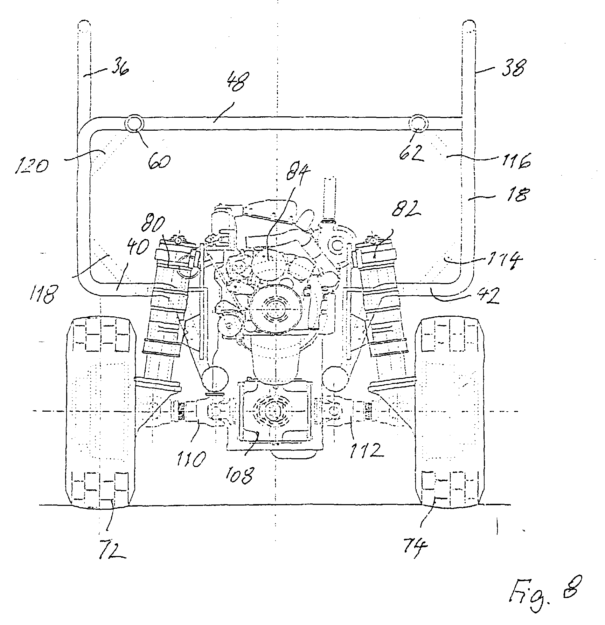

Figures 7 and 8 show the front and rear frames 16, 18 in connection with the front axle on the one band and the rear axle and engine on the other. According to Figure 7, which is a front view, the front wheels 68, 70, the spring-damper units 76, 78 and the front differential gear unit 92 are connected to the frame 16. Two half-shafts 104, 106 are located between the differential gear unit 92 and the two wheels 68, 70 to drive the front wheels 68, 70.

Figure 8 shows the rear frame 18, on or in which the engine 84 and the rear axle with the wheels 72, 74, a differential gear unit 108 lying below the engine 84 as well as half-shafts 110, 112 are mounted. Figure 8 also shows - as an addition to the previous representations - diagonal reinforcements 114, 116, 118, 120 in the corners of the frame 18.

It has already been pointed out that not only is the engine 84 accommodated above the rear axle between the two rear frames 18 and 20, but also various additional units of the actual engine and of the vehicle as a whole are accommodated above the engine 84.

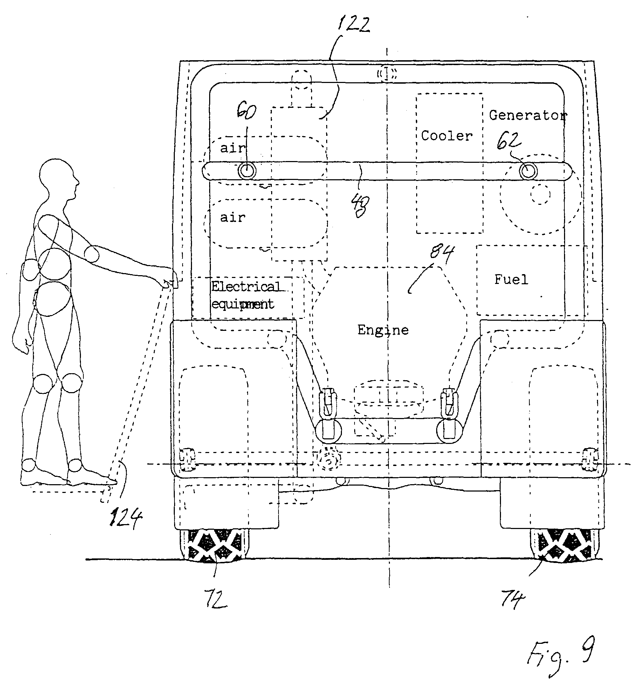

Figure 9 is a diagrammatic rear view of the vehicle showing in broken lines a fuel tank, a cooler, a switch box for electrical and electronic equipment, a compressed-air reservoir, a generator, etc. Also located in this space above the engine is a perpendicular exhaust silencer 122, out of which the exhaust gases can be carried off perpendicularly upwards or downwards, as required, via tail pipes. Also represented diagrammatically in Figure 9 is a swing-out stepladder 124, by means of which the auxiliary units accommodated in the upper area above the engine can be reached for repair and maintenance purposes.

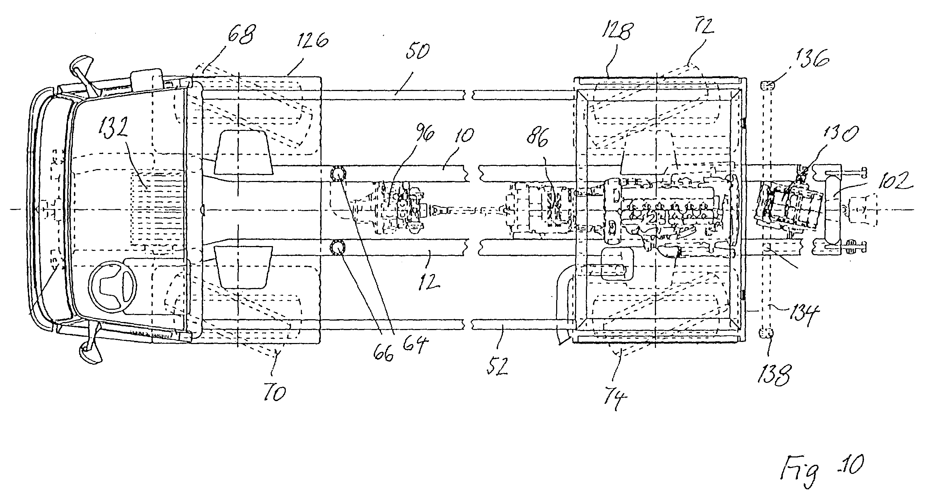

The reference numbers already used for the corresponding parts have been entered in Figure 10. Figure 10 also shows parts of the driver's and crew's cab 126 as well as parts of the engine compartment 128. A cable winch 130 is secured to the extension of the two supporting tubes 10, 12 behind the engine compartment, the traction cable of which winch can be passed forward through the entire vehicle, so that the driver can observe the operation for which the cable winch is required from the driver's seat.

The front ends of the supporting tubes 10, 12 lie somewhat further apart than the supporting tubes in the central and rear portion. A hose reel 132 is accommodated here between the supporting tubes 10, 12 and may be connected by its fixed end to one of the supporting tubes 10, 12 for routing purposes.

Figure 10 also shows in broken lines that both the front and the rear wheels 68, 70, 72, 74 are steerable, so that the vehicle may also be moved in confined old city areas.

Figure 10 also shows that the transverse tubes 134 may be connected for routing purposes to the two supporting tubes 10, 12, or at least to one of these, at the two ends of which tubes 134 side exits 136, 138 are located to allow fire extinguishing water, compressed air, etc., to be removed or fed in. The rear end area shown in Figure 10 of the two supporting tubes 10, 12 of the cable winch 130 and of the transverse tube 134 is located within the panelling of a rear appliance space in the finished vehicle.

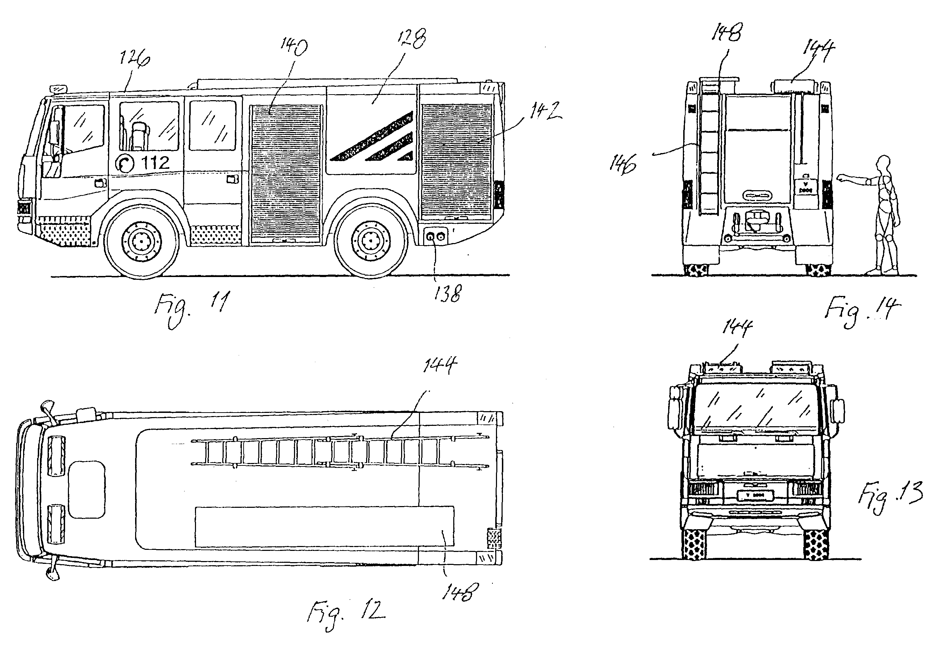

This is obvious from Figures 11 to 14. Figures 11 to 14 show a finished fire-engine with a driver's and crew's cab, a central appliance space concealed by a roller blind 140, the engine compartment 128 and a rear appliance space likewise concealed by a roller blind 142.

Figure 12 is a plan view of the vehicle represented in a side view in Figure 11. A ladder 144 is carried on the roof of the vehicle. The roof is accessible and can be reached by a ladder 146 fitted to the rear (Figure 14). An appliance box 148 may also be accommodated on the roof at the side of the ladder 144.

## Claims

1. Operational vehicle for life-saving services, in particular a fire-engine, with a chassis, at least one front and rear axle and a body structure for holding a driver's and crew's cab and an appliance space, characterised by a tubular supporting structure (10, 12, 16, 18, 20, 50, 52) with two supporting tubes (10, 12), which extend in the longitudinal direction of the vehicle, as part of the chassis below the cab and appliance space, at least one respective tubular frame (16, 18, 20), which surrounds the body structure in the transverse direction and is secured to the supporting tubes (10, 12), in the area of the front and rear axle, and at least one longitudinal tube (50, 52) connecting the frames at the upper side of the body structure in the longitudinal direction.

2. Operational vehicle according to claim 1, characterised in that a respective tubular frame (20, 16) is provided in front of and behind the rear axle in the rear area of the tubular supporting structure.

3. Operational vehicle according to claim 1 or 2, characterised in that the upper horizontal portion of the rear tubular frame or the rear tubular frames (16, 20) is lowered with respect to the upper ends of the two outer lateral portions (36, 38).

4. Operational vehicle according to any one of the preceding claims, characterised in that the supporting tubes (10, 12) are staggered inwards in relation to the sides of the vehicle and lie at a distance of, for example, 50 to 70 cm on either side of the longitudinal centre line of the vehicle.

5. Operational vehicle according to any one of the preceding claims, characterised in that all the elements of the tubular supporting structure are cylindrical tubes, in particular of stainless steel.

6. Operational vehicle according to any one of the preceding claims, characterised in that the central portion (14), which lies between the axles, of the supporting tubes (10, 12) is lowered in relation to the front and rear portion.

7. Operational vehicle according to any one of the preceding claims, characterised in that two longitudinal tubes (50, 52) connect the upper corners or the upper ends of the lateral portions (36, 38) of the frames (16, 18, 20).

8. Operational vehicle according to any one of the preceding claims, characterised in that all the tubes (10, 12, 16, 18, 20, 50, 52) of the tubular supporting structure form a coherent holding and transport system for liquids and gases, in particular for fire extinguishing medium.

9. Operational vehicle according to claim 8, characterised in that connections (58, 60, 62, 64, 66) are provided in a number of positions of the tubes of the tubular supporting structure to connect various units, hoses, etc.

10. Operational vehicle according to any one of the preceding claims, characterised in that the engine (84) of the vehicle is disposed in the rear above the rear axle and is directly connected to a gear unit (86), lying in front of the engine, with integrated auxiliary gear unit (88).

11. Operational vehicle according to any one of the preceding claims, characterised in that the frames (16, 18, 20) comprise at the lower end area of their lateral portions (24, 26, 36, 38) horizontal portions (28, 30, 40, 42) which are directed inwards and portions (32, 34, 44, 46) which converge obliquely downwards and inwards and are connected to the supporting tubes (10, 12).

12. Operational vehicle according to claim 11, characterised in that the engine (84) is disposed and secured between the portions (32, 34, 44, 46) of the rear frames (18, 20) which are directed obliquely downwards and inwards.

13. Operational vehicle according to any one of the preceding claims, characterised in that the tubes (10, 12, 16, 18, 20) are connected together by additional connecting tubes (100, 102, 54, 56).

14. Operational vehicle according to any one of the preceding claims, characterised in that the tubular supporting structure comprises additional reinforcements (114, 116, 118, 120).

15. Operational vehicle according to any one of the preceding claims, characterised in that a low appliance space, accessible from both sides, is provided in the central area between the axles, and that a further appliance space is provided behind the engine compartment (128) at the rear of the vehicle.

16. Operational vehicle according to any one of claims 10 to 12, characterised in that a space for the auxiliary units of the engine and of the vehicle as a whole is provided above the engine over the rear axle between the two rear frames (18, 20).

17. Operational vehicle according to any one of the preceding claims, characterised in that the wheels are supported at the vehicle by hydropneumatic spring-damper units (76, 78, 80, 82).

18. Operational vehicle according to any one of claims 15 to 17, characterised in that an exhaust silencer (122) is disposed in the engine compartment (84), which silencer can be connected to a tail pipe such that the exhaust gases emerge either upwards or in the lower area to the side.

19. Operational vehicle according to any one of the preceding claims, characterised in that a hose reel (132) is provided between the supporting tubes (10, 12) in the front end area of the vehicle.
